# EUROPEAN PATENT APPLICATION

(11) **EP 1 393 886 A1**
(43) Date of publication of application: **03.03.2004**
(21) Application number: 03255437.0
(22) Date of filing: 29.08.2003
(51) Int. Cl.: B29D 11/00

(54) **Method for fabricating a preform for plastic optical fiber**

(30) Priority: 30.08.2002 KR 2002051871
(71) Applicant: SAMSUNG ELECTRONICS CO., LTD., Suwon-City, Kyungki-do (KR)
(72) Inventor: Cho, Han Sol, Yuseong-Gu Daejeon-Shi, 305-728 (KR); Kim, Mu Gyeom, Seoul, 138-828 (KR); Hwang, Jin Taek, Yuseong-Gu Daejeon-Shi, 305-728 (KR); Ra, Byoung Joo, A/418 Dormitory Samsung Advanced, Gyeonggi-Do, 449-712 (KR); Choi,Jin Sung, Yuseong-Gu Daejeon-Shi, 305-728 (KR)
(74) Representative: Ertl, Nicholas Justin

(57) **Abstract**

Disclosed herein is a method for fabricating a preform for a plastic optical fiber, comprising the steps of: (1) preparing a pair of monomer solutions having different refractive indices; (2) polymerizing a monomer solution having a lower refractive index than the other to form a prepolymer; (3) homogeneously mixing the prepolymer with the other monomer solution to obtain a mixture; and (4) feeding the mixture into a reactor and polymerizing the mixture with the reactor rotated. According to the method, a preform for a plastic optical fiber can be fabricated from monomers selected irrespective of their density.

## Description

The present invention relates to a method for fabricating a preform for a plastic optical fiber, and more particularly to a method which can use monomers irrespective of their density to fabricate a preform for a plastic optical fiber, in which refractive index varies along the radial direction of the preform.

Optical fibers used in the field of telecommunications are generally classified into single-mode fibers and multi-mode fibers in terms of the transmission mode of optical signal. Optical fibers currently used for long distance and high speed communications are mostly the step-index single-mode optical fibers based on quartz glass. These optical fibers have a diameter as small as 5 microns to 10 microns, and as a result, these glass optical fibers face serious challenges in terms of achieving proper alignment and connection. Accordingly, these glass optical fibers are associated with expensive costs relating to achieving proper alignment and connection.

Alternatively, multi-mode glass optical fibers having a diameter that is larger than the diameter of single-mode optical fibers may be used for short distance communications such as in local area networks (LANs). However, these multi-mode glass optical fibers, in addition to being fragile, also suffer from expensive costs relating to achieving proper alignment and connection and therefore are not widely used. Accordingly, these multi-mode glass optical fibers have been mainly used for short distance communication applications up to 200 meters such as in LANs using a metal cable, for example, a twisted pair or coaxial cable. However, since the data transmission capacity or bandwidth of the metal cable is as low as about 150 Mbps and can not reach transmission speed of 625 Mbps, which is a standard for the year 2000 in accordance with asynchronous transfer mode (ATM), it cannot satisfy the future standard of transmission capacity.

To cope with these problems, the industry has expended great effort and investment over the past 10 years towards development of plastic optical fibers, which can be used in short distance communication applications, such as LANs. Since the diameter of plastic optical fibers can be as large as 0.5 to 1.0 mm which is 100 or more times than that of glass optical fibers, due to its flexibility, its alignment and connection are much easier issues than with plastic optical fibers. Moreover, since polymer-based connectors may be produced by compression molding, these connectors can be used both for alignment and for connection and thereby reduce costs.

On the other hand, the plastic optical fiber may have a step-index (SI) structure, in which a refractive index changes stepwise in a radial direction, or a graded-index (GI) structure, in which a refractive index changes gradually in a radial direction. However, since plastic optical fibers having a SI structure have high modal dispersion, the transmission capacity (or bandwidth) of a signal cannot be larger than that of cable. On the other hand, since plastic optical fibers having a GI structure have a low modal dispersion, it can have a large transmission capacity. Therefore, it is known that GI plastic optical fiber is adequate for use as a communication medium for short distance, high-speed communications because of reduced costs derived from its larger diameter and large capacity of data transmission derived from low modal dispersion.

The conventional method for fabricating GI plastic optical fiber was first reported by a Japanese professor, Koike Y. et al. of Keio University in 1988[refer to "*Koike, Y et al., Applied Optics, Vol. 27, 486(1988)*"]. Since then, other related-techniques have been disclosed in U.S. Pat. No.5,253,323 (Nippon Petrochemicals Co.); U.S. Pat. No.5,382,448 (Nippon Petrochemicals Co.); U.S. Pat. No.5,593,621 (Yasuhiro Koike and Ryo Nihei); WO92/03750(Nippon Petrochemicals Co.); WO92/03751 (Nippon Petrochemicals Co.); Japanese Patent Laid-Open Publication No.3-78706(Mitsubishi Rayon Co., Ltd.); and Japanese Patent Laid-Open Publication No.4-86603(Toray Ind.). The methods disclosed in these prior patents are mainly classified into two methods as follows.

The first method is a batch process wherein a preliminary cylindrical molding product, namely, a preform in which a refractive index changes in a radial direction, is fabricated, and then the resultant perform is heated and drawn to fabricate GI plastic optical fiber.

The second method is a continuous process wherein a plastic fiber is produced by extrusion process, and then the low molecular material is extracted from the fiber, or contrarily introduced to the fiber to obtain GI plastic optical fiber.

It is known that the first by professor Koike succeeded in fabricating a GI plastic optical fiber having data transmission capacity of 2.5 Gbps, and that the second method could also successfully fabricate a plastic optical fiber having a relatively large data transmission capacity.

Van Duijnhoven and Bastiaansen reported another method for fabricating GI preform using high speed of rotation as high as about 20,000 rpm in WO 97/29903(U.S. Pat. No.6,166,107). Unlike the prior arts as mentioned above, this method uses the principle of centrifugal separation. When a mixture of monomers having different densities and refractive indices or a monomer dissolving a polymer is polymerized under very strong centrifugal field, concentration gradient is generated on account of a density gradient, and thereby, a refractive index gradient is generated.

However, the above method is limited in the selection of monomers because one monomer of high density must have a refractive index lower than the other monomer of low density. In addition, when a polymer having a low refractive index is dissolved in a monomer, there is a danger of contamination during polymerizing and grinding the polymer and dissolution of the polymer in the monomer is not easily achieved, which makes the dissolution process troublesome.

In accordance with the feature of the present invention, there is provided a method for fabricating a preform for a plastic optical fiber, comprising the steps of:
(1) preparing a pair of monomer solutions having different refractive indices;
(2) polymerizing the monomer solution of the pair having the lower refractive index to form a prepolymer;
(3) homogeneously mixing the prepolymer with the other monomer solution to obtain a mixture; and
(4) feeding the mixture into a reactor and polymerizing the mixture with the reactor rotated.

The invention provides a method for fabricating a preform for a plastic optical fiber which is capable of using monomers irrespective of their density.

Examples of the invention will now be described in detail with reference to the accompanying drawings, in which:
Fig. 1 is a diagram schematically showing a series of processes for fabricating a preform for a plastic optical fiber in accordance with the present invention; and
Figs. 2A to 2C are perspective views showing a general cylindrical reactor (Fig. 2A) and its modified reactors (Figs. 2B and 2C) used for the fabrication of a preform for a plastic optical fiber in accordance with the present invention.

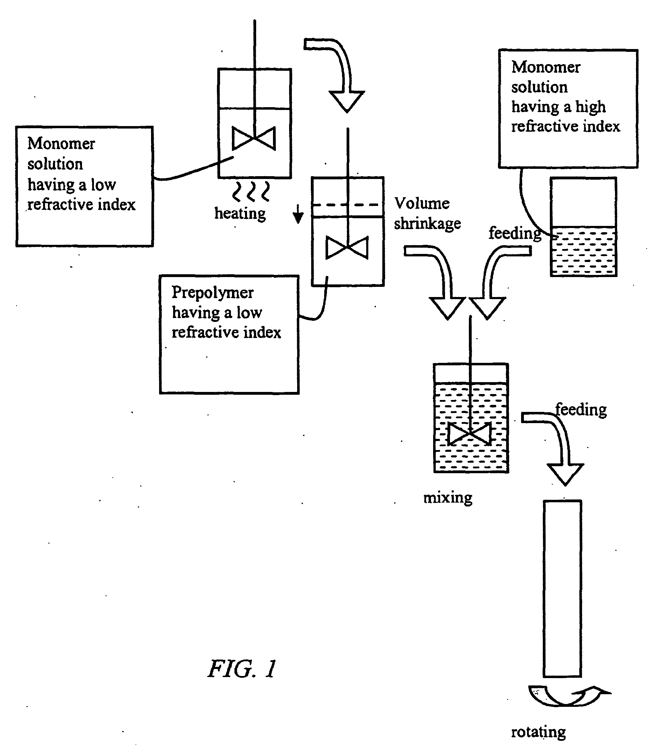

Fig. 1 is a diagram schematically showing a series of processes for fabricating a preform for a plastic optical fiber in accordance with the present invention. Referring to Fig. 1, a monomer solution having a relatively low refractive index is polymerized to form a prepolymer. The purpose of this process is to increase the density of the monomer. Then, the other monomer solution having a relatively high refractive index is mixed with the prepolymer. The resulting mixture is fed into a cylindrical reactor, and polymerized with the reactor rotated to fabricate a preform for a plastic optical fiber. The preform for a plastic optical fiber thus fabricated has a refractive index profile varying along the radial direction.

The term 'prepolymer' used herein means a state before a monomer is completely polymerized and solidified. The prepolymer has higher viscosity and density than the monomer prior to polymerizing. The present invention is characterized in that the prepolymer has higher density than the other monomer solution having a relatively high refractive index. The degree of polymerization of the prepolymer is determined by polymerization time and viscosity. The prepolymer used in the present invention has preferably a viscosity of about 50∼500,000 cps (25°C), and more preferably 500∼10,000 cps (25°C).

In the method of the present invention, it is needless to select a pair of monomers, one of which has a lower refractive index and a higher density than the other because the monomer solution having a relatively low refractive index is prepolymerized to increase density, and then mixed with the monomer solution having a relatively high refractive index. Accordingly, the problem of contamination in the time of polymer grinding and dissolving as mentioned in U.S. Pat. No. 6,166,107, can be avoided and the fabricating process is simplified.

When the polymerization is proceeded under the rotation of the reactor to fabricate a preform for a plastic optical fiber, there is a possibility that a cavity is formed due to a volume shrinkage during the polymerization. To fill the cavity, a monomer solution having a relatively high refractive index, a prepolymer of a monomer solution having a relatively low refractive index or a mixture of a monomer solution and a prepolymer, having a relatively high refractive index is added to the cavity and then polymerization is carried out. The above process can be repeated one or more times to obtain a perform without a cavity. At this time, when a prepolymer having a low diffusion coefficient is used instead of a monomer solution, the occurrence of an indiscrete refractive index profile and optical loss due to the indiscrete refractive index profile can be minimized.

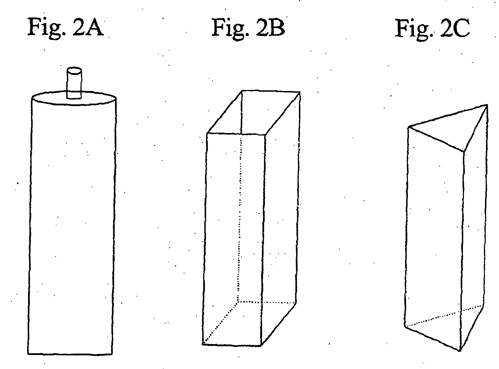

Various reactors usable in the present invention are depicted in Figs. 2A to 2C. As depicted in Fig. 2A, a cylindrical reactor with a circular section is generally used. As depicted in Figs. 2B and 2C, reactors with a triangular or a quadrangular section, can be used depending on types of preforms intended to be fabricated. In addition to these reactors, a rod-shaped reactor or other three dimensional reactors can be used. Furthermore, a cavity-preventing reactor described in U.S. Appln. Serial No. 10/197,215, which are incorporated herein by reference in its entirety, is available in the present invention. When the cavity-preventing reactor is used, additional adding of a reactant to the cavity is not needed because the reactant naturally flows from the introduction part to the cavity.

In the method of the present invention, it is preferred to pressurize the interior of the reactor using an inert gas such as argon to prevent the formation of a cavity, and to proceed polymerization in the reactor stably. When the interior of the reactor is pressurized, the boiling point of the monomer is raised and thus polymerization can be proceeded even at high temperature. Accordingly, the polymerization can be completed in a shortened time without formation of bubbles due to unreactants. When the reactor is made of a fragile material, e.g., glass, quartz, ceramic or plastic, it is difficult to raise the internal pressure of the reactor to 4 bars or more. In this case, the exterior of the reactor is pressurized under the same pressure as applied to the interior of the reactor to avoid the breakage of the reactor.

To induce better refractive index distribution in the preform of the present invention, the rotational speed of the reactor can be varied. The variations can be not only a repeated rotation and stopping, but also a velocity function having varying amplitudes and cycles such as a trigonometric function.

The term 'monomer solution' used herein refers to a solution which includes at least one monomer, a polymerization initiator and a chain transfer agent. As the polymerization initiator, a photopolymerization initiator or thermal polymerization initiator can be used. A combination of the photopolymerization initiator and the thermal polymerization initiator can be used to simultaneously proceed photopolymerization and thermal polymerization processes, thereby improving optical properties of a final optical fiber, such as refractive index distribution and optical loss.

Specific examples of the monomer used in the present invention include, but are not limited to, methylmethacrylate, benzylmethacrylate, phenylmethacrylate, 1-methylcyclohexylmethacrylate, cyclohexylmethacrylate, chlorobenzylmethacrylate, 1-phenylethylmethacrylate, 1,2-diphenylethylmethacrylate, diphenylmethylmethacrylate, furfuryl methacrylate, 1-phenylcyclohexylmethacrylate, pentachlorophenylmethacrylate, pentabromophenylmethacrylate, styrene, TFEMA (2,2,2-trifluoroethylmethacrylate), TFPMA (2,2,3,3-tetrafluoropropylmethacrylate), PFPMA (2,2,3,3,3-pentafluoropropylmethacrylate), HFIPMA (1,1,1,3,3,3-hexafluoroisopropylmethacrylate), HFBM (2,2,3,4,4,4-hexafluorobutylmethacrylate), HFBMA (2,2,3,3,4,4,4-heptafluorobutylmethacrylate) and PFOM (1H,1H-perfluoro-n-octylmethacrylate).

Examples of the thermal polymerization initiator used in the present invention include, but are not limited to, 2,2'-azobis(isobutyronitrile), 1,1'-azobis(cyclohexanecarbonitrile), 2,2'-azobis(2,4-dimethylvaleronitrile), 2,2'-azobis(methylbutyronitrile), di-tert-butyl peroxide, lauroyl peroxide, benzoyl peroxide, tert-butyl peroxide, azo-tert-butane, azo-bis-isopropyl, azo-normal-butane, di-tert-butyl peroxide, etc.

Examples of the photopolymerization initiator used in the present invention include, but are not limited to 4-(para-tolylthio)benzophenone, 4,4'-bis(dimethylamino)benzophenone, 2-methyl-4'-(methylthio)-2-morpholino-propiophenone, 1-hydroxy-cyclohexyl-phenyl-ketone, 2-hydroxy-2-methyl-1-phenyl-propan-1-one, benzophenone, 1-[4-(2-hydroxyethoxy)-phenyl]-2-hydroxy-2-methyl-1-propan-1-one, 2-benzyl-2-methylamino-1-(4-morpholinophenyl)-butanone-1, 2,2-dimethoxy-1,2-diphenylmethan-1-one, bis(2,4,6-trimethylbenzoyl)-phenylphospinoxide, 2-methyl-1[4-(methylthio)phenyl]-2-morpholinopropan-1-one, bis(.eta.5-2,4-cyclopentadien-1-yl)-bis(2,6-difluoro-3-(1H-pyrrol-1-yl)-phenyl) titanium, etc.

Examples of the chain transfer agent used in the present invention include, but are not limited to, normal-butyl-mercaptan, lauryl mercaptan, octyl mercaptan, dodecyl mercaptan, 1-butanethiol, etc.

In order to allow smooth heat transfer for the polymerization process in the fabrication of the preform for a plastic optical fiber, the preform preferably has a radius of 1∼10cm. The length of the preform is preferably set to about 100cm or shorter suitable for a common thermal drawing.

The preform for a plastic optical fiber fabricated in accordance with the method of the present invention is thermally drawn into a refractive index distributed type plastic optical fiber having a desired diameter. Furthermore, the method of the present invention is applicable to producing refractive index distributed type lenses and imaging guides for delivering images.

Hereinafter, the present invention will be described in more detail with reference to the following Examples. However, these Examples are given for the purpose of illustration and are not to be construed as limiting the scope of the invention.

In these Examples, a cylindrical reactor having a diameter of 50mm and a height of 400mm was used. As a pair of monomers having different refractive indices, benzyl methacrylate (hereinafter, referred to as 'BMA') and methyl methacrylate (hereinafter, referred to as 'MMA') were used. The density and the refractive index of BMA are 1.040 and 1.512, respectively, while those of MMA are 0.936 and 1.414, respectively. Comparing the two monomers in terms of their densities and the refractive indices, MMA has a relatively low density and refractive index. When these monomers are simply mixed with each other and polymerized with the reactor rotated, BMA having a relatively high refractive index and low density is distributed at the peripheral surface of a preform to be fabricated. Accordingly, a GI (Graded-Index) plastic optical fiber cannot be formed.

When a prepolymer is prepared, a jacket reactor equipped with a circulator was used in a thermal polymerization initiator, while a transparent reactor equipped with a UV lamp was used in a photopolymerization initiator.

As the thermal polymerization initiator and the photo polymerization initiator, 2,2'-azobisisobutyronitrile (hereinafter, referred to as 'AIBN') and 4,4-bis(dimethylamino) benzophenone (hereinafter, referred to as 'DMABP') were used, respectively. 1-butanethiol (hereinafter, referred to as '1-BuSH') was used as a chain transfer agent.

In the present invention, the optical loss of a plastic optical fiber was determined by drawing a 0.75mm thick optical fiber, cutting the drawn optical fiber at an interval of 1m, and measuring light intensity outputted from the ends of the cut optical fibers using a 650nm laser diode.

### Example 1:

AIBN and 1-BuSH were added to 510g of MMA in the concentration of 0.066% and 0.2% by weight, respectively. The mixture was charged into a cylindrical reactor, and polymerized at a temperature of 75 °C for 24 hours with the reactor rotated at a speed of 3,000rpm to form a clad layer. Next, AIBN and 1-BuSH were added to 225g of MMA in the concentration of 0.066% and 0.2% by weight, respectively. The monomer solution thus prepared was charged into a jacket reactor, and polymerized at a temperature of 75 °C for 40 minutes to prepare a prepolymer. To the prepolymer, a monomer solution consisting of 80g of BMA containing 0.066% by weight of AIBN and 0.2% by weight of 1-BuSH was added and stirred for 2 minutes. The resulting mixture was filled into the cylindrical reactor in which the clad had been previously formed and polymerized at a temperature of 75°C for 12 hours with the reactor rotated at a speeded of 3,000rpm. Then, the rotational speed of the reactor was lowered to 100rpm and polymerization was continued for 12 hours to fabricate a preform for a plastic optical fiber. A 0.75mm thick plastic optical fiber was drawn from the preform. The optical loss of the plastic optical fiber was measured to be 210dB/km.

### Example 2:

AIBN and 1-BuSH were added to 510g of MMA in the concentration of 0.066% and 0.2% by weight, respectively. The mixture was charged into a cylindrical reactor, and polymerized at a temperature of 75 °C for 24 hours with the reactor rotated at a speed of 3,000 rpm to form a clad layer. Next, DMABP and 1-BuSH were added to 225g of MMA in the concentration of 0.066% and 0.2% by weight, respectively. The monomer solution thus prepared was polymerized for 3 hours using UV lamp to prepare a prepolymer. To the prepolymer, a monomer solution consisting of 80g of BMA containing 0.066% by weight of DMABP and 0.2% by weight of 1-BuSH was added and stirred for 2 minutes. The resulting mixture was filled into the cylindrical reactor in which the clad had been previously formed, and polymerized at a temperature of 75 °C for 6 hours with the reactor rotated at a speed of 3,000rpm and irradiated with UV. Then, the polymerization was continued at a temperature of 85°C for 12 hours with the reactor rotated at a speed of 100 rpm to fabricate a preform for a plastic optical fiber. A 0.75mm thick plastic optical fiber was drawn from the preform. The optical loss of the plastic optical fiber was measured to be 190dB/km.

### Example 3:

AIBN and 1-BuSH were added to 510g of MMA in the concentration of 0.066% and 0.2% by weight, respectively. The mixture was polymerized at a temperature of 75°C for 3 hours to prepare a prepolymer. Next, DMABP and 1-BuSH were added to a mixture of 225g of MMA and 80g of BMA in the concentration of 0.066% and 0.2% by weight, respectively. Then, the prepared prepolymer was mixed thereto. The resulting mixture was filled into the cylindrical reactor at a temperature of 75 °C for 12 hours with the reactor rotated at a speeded of 3,000rpm and irradiated with UV. Then, the polymerization was continued at a temperature of 85°C for 12 hours with the reactor rotated at a speed of 100 rpm to fabricate a preform for a plastic optical fiber. A 0.75mm thick plastic optical fiber was drawn from the preform. The optical loss of the plastic optical fiber was measured to be 195dB/km.

### Example 4:

AIBN and 1-BuSH were added to 510g of MMA in the concentration of 0.066% and 0.2% by weight, respectively. The mixture was charged into a cylindrical reactor, and polymerized at a temperature of 75 °C for 24 hours with the reactor rotated at a speed of 3,000rpm to form a clad layer. Next, DMABP and 1-BuSH were added to 400g of MMA in the concentration of 0.066% and 0.2% by weight, respectively. The monomer solution thus prepared was polymerized at a temperature of 75°C for 20 minutes with UV irradiation to prepare a prepolymer. Then, a monomer solution consisting of 2g of BMA containing 0.066% by weight of AIBN and 0.2% by weight of 1-BuSH was added thereto and the prepolymer was stirred for 1 minute with UV irradiation. Only 20g of the prepolymer was charged into the cylindrical reactor in which the clad had been previously formed and polymerized for 30 minutes with the reactor rotated at a speed of 3,000rpm. At this time, the remaining prepolymer was continuously stirred at 75C without UV irradiation. The same steps of adding the monomer solution consisting of 2g of BMA containing 0.066% by weight of AIBN and 0.2% by weight of 1-BuSH to the remaining prepolymer, stirring the prepolymer, charging only 20g of the prepolymer to the reactor and irradiating the reactor under rotation of the reactor was repeated 10 times to fabricate a preform for a plastic optical fiber. A 0.75mm thick plastic optical fiber was drawn from the preform. The optical loss of the plastic optical fiber was measured to be 20dB/km.

Since the relative reactivities of BMA and MMA are similar to each other, the fabricated preforms were an amorphous random copolymer.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A method for fabricating a preform for a plastic optical fiber, comprising the steps of:
(1) preparing a pair of monomer solutions having different refractive indices;
(2) polymerizing the monomer solution of the pair having the lower refractive index to form a prepolymer;
(3) homogeneously mixing the prepolymer with the other monomer solution to obtain a mixture; and
(4) feeding the mixture into a reactor and polymerizing the mixture with the reactor rotated.

2. The method for fabricating a preform for a plastic optical fiber according to claim 1, wherein after step (4), the following step (5) is repeated one or more times:
(5) adding a monomer solution, a prepolymer or a mixture of a monomer solution and a prepolymer, having a high refractive index to a cavity formed in the reactor, and continuing polymerization.

3. The method for fabricating a preform for a plastic optical fiber according to claim 1 or 2, wherein in step (2), the monomer solution is polymerized through thermal polymerization and/or photopolymerization to prepare a prepolymer.

4. The method for fabricating a preform for a plastic optical fiber according to any preceding claim, wherein in step (4), the mixture in the reactor is polymerized through thermal polymerization and/or photopolymerization.

5. The method for fabricating a preform for a plastic optical fiber according to any preceding claim, wherein the reactor is a cylindrical reactor with a circular section.

6. The method for fabricating a preform for a plastic optical fiber according to any preceding claim, wherein the reactor is under constant or variable rotation.

7. The method for fabricating a preform for a plastic optical fiber according to claim 6, wherein the variable rotation of the reactor is carried out by a repeated high-speed and low-speed rotation or stopping, or a rotational velocity function having varying cycles, phases and amplitudes such as a trigonometric function or a specific function.

8. The method for fabricating a preform for a plastic optical fiber according to any preceding claim, wherein the monomer solution comprises at least one monomer, a polymerization initiator and a chain transfer agent.

9. The method for fabricating a perform for a plastic optical fiber according to claim 8, wherein the monomer is selected from the group consisting of methylmethacrylate, benzylmethacrylate, phenylmethacrylate, 1-methylcyclohexylmethacrylate, cyclohexylmethacrylate, chlorobenzylmethacrylate, 1-phenylethylmethacrylate, 1,2-diphenylethylmethacrylate, diphenylmethylmethacrylate, furfuryl methacrylate, 1-phenylcyclohexylmethacrylate, pentachlorophenylmethacrylate, pentabromophenylmethacrylate, styrene, TFEMA (2,2,2-trifluoroethylmethacrylate), TFPMA (2,2,3,3-tetrafluoropropylmethacrylate), PFPMA (2,2,3,3,3-pentafluoropropylmethacrylate), HFIPMA (1,1,1,3,3,3-hexafluoroisopropylmethacrylate), HFBM (2,2,3,4,4,4-hexafluorobutylmethacrylate), HFBMA (2,2,3,3,4,4,4-heptafluorobutylmethacrylate) and PFOM (1H,1H-perfluoro-n-octylmethacrylate).

10. The method for fabricating a perform for a plastic optical fiber according to claim 8, wherein the polymerization initiator is a thermal polymerization initiator selected from the group consisting of 2,2'-azobis(isobutyronitrile), 1,1'-azobis(cyclohexanecarbonitrile), 2,2'-azobis(2,4-dimethylvaleronitrile), 2,2'-azobis(methylbutyronitrile), di-tert-butyl peroxide, lauroyl peroxide, benzoyl peroxide, tert-butyl peroxide, azo-tert-butane, azo-bis-isopropyl, azo-normal-butane and di-tert-butyl peroxide.

11. The method for fabricating a perform for a plastic optical fiber according to claim 8, wherein the polymerization initiator is a photopolymerization initiator selected from the group consisting of 4-(para-tolylthio)benzophenone, 4,4'-bis(dimethylamino)benzophenone, 2-methyl-4'-(methylthio)-2-morpholino-propiophenone, 1-hydroxy-cyclohexyl-phenyl-ketone, 2-hydroxy-2-methyl-1-phenyl-propan-1-one, benzophenone, 1-[4-(2-hydroxyethoxy)-phenyl]-2-hydroxy-2-methyl-1-propan-1-one, 2-benzyl-2-methylamino-1-(4-morpholinophenyl)-butanone-1, 2,2-dimethoxy-1,2-diphenylmethan-1-one, bis(2,4,6-trimethylbenzoyl)-phenylphospinoxide, 2-methyl-1[4-(methylthio)phenyl]-2-morpholinopropan-1-one and bis(.etha.5-2,4-cyclopentadien-1-yl)-bis(2,6-difluoro-3-(1H-pyrro-1-yl)-phenyl) titanium.

12. The method for fabricating a perform for a plastic optical fiber according to claim 8, wherein the chain transfer agent is selected from the group consisting of normal-butyl-mercaptan, lauryl mercaptan, octyl mercaptan, dodecyl mercaptan, and 1-butanethiol.

13. The method for fabricating a preform for a plastic optical fiber according to any preceding claim, wherein the prepolymer has a viscosity of 50∼500,000 cps (25°C):
